# EUROPEAN PATENT SPECIFICATION

(11) **EP 4 185 746 B1**
(45) Date of publication and mention of the grant of the patent: **27.11.2024**
(21) Application number: 21743589.0
(22) Date of filing: 16.07.2021
(51) Int. Cl.: D06F 39/04

(54) **IMMERSION DEVICE FOR WATER SANIFICATION**
EINTAUCHGERÄT ZUR WASSERREINIGUNG
DISPOSITIF D'IMMERSION POUR LA PURIFICATION DE L'EAU

(30) Priority: 23.07.2020 IT 202000017875
(43) Date of publication of application: 31.05.2023
(73) Proprietor: Borgiani, Marco, 60129 Ancona (AN) (IT)
(72) Inventor: Borgiani, Marco, 60129 Ancona (AN) (IT)
(74) Representative: Premru, Rok
(86) International application number: PCT/IB2021/056432
(87) International publication number: WO 2022/018589

(56) References cited:
- WO-A1-2010/028467
- WO-A1-2015/169348
- CN-U- 204 445 770
- CN-U- 209 923 618

## Description

Means for limiting bacterial and virological proliferation in water storage for sanitary or food purposes are covered by the present finding.

More precisely, the present invention relates to an immersion device for sanitising the water in a reservoir.

Even more precisely, the object of the present invention is immersion devices capable of implementing the dual function of controlling and managing the temperature of water (or similar fluids) inside a reservoir and of sanitising the same.

The invention is primarily concerned with the production of household appliances, more precisely with manufacturing of washing machines, washer-dryers and/or dishwashers for domestic and industrial applications.

There is no reason this immersion device cannot also be used in other sectors, e.g. in electric storage water heaters, reservoirs for storing water for alimentary and sanitary use or in all water storage facilities, whether temporary or not, where there is a risk of proliferation of bacteria, germs and/or viruses.

It is well known that all the appliances mentioned above, although differing from each other in their construction and functional characteristics, have in common the presence of at least one reservoir for the service water and at least one electrical resistance (or similar components) whose task is to heat and bring the water to a temperature compatible with the service they provide, for example, to meet hot water demand for sanitary or alimentary use or for washing laundry or dishes.

The risk of proliferation of bacteria, viruses and/or germs in water reservoirs is also known.

For example, in storage water heaters, the maintenance of water at much lower temperatures than in the past for energy-saving reasons and cold washing programmes implemented in washing machines or dishwashers have contributed to amplifying the proliferation of bacteria and/or pathogens.

Similarly, despite the detergent and sterilising function of the detergents used, the dirt that inevitably settles in a washing machine and dishwasher tubs because of the washing process can be a breeding ground for germs harmful to health, without forgetting that they may already be present in the water with which the machine is supplied.

To limit this problem, ultraviolet ray generators have gradually been integrated into these appliances, reducing or eliminating the water's virological and/or bacterial load.

For example, in washing machines or dishwashers, ultraviolet emitters have long been provided and used, suitably mounted in the washing water supply pipes and/or inside the drum and/or inside the walls of the washing tanks, as clearly described and shown in the prior art documents CN 209 923 618 U and CN 204 445 770 U.

However, these technical choices have not been without problems.

Frequently, due to constructional limitations and constraints, these ultraviolet emitters are positioned where contact with the washing water is not always guaranteed; this can lead to a reduction in their sanitising effect.

Many of the components mentioned above as possible locations for mounting ultraviolet emitters are made of plastic, with a view to containing production costs and simplifying production processes.

There is, therefore, a risk these ultraviolet emitters, if not properly positioned and immersed in water, directly irradiate these plastic components, accelerating the ageing process; this may lead to frequent maintenance or replacement of malfunctioning or worn-out components, with negative consequences on the functionality of the appliance and its running costs.

Equipping these appliances with ultraviolet emitters also required substantial redesign or structural adaptations and modifications.

Finally, it should be pointed out that, sometimes, these ultraviolet emitters may, with use, be subject to breakage or malfunctioning and thus increase maintenance and repair costs.

The object of the present invention is to eliminate the disadvantages of the above-mentioned known technique by devising an immersion device for sanitising water stored and used in a household appliance, such as a washing machine, dishwasher or storage water heater or similar equipment, which is efficient, economical and reliable.

More precisely, the present invention aims to integrate an immersion device for water sanitation into a known household appliance, such as a washing machine, a dishwasher or a storage water heater or similar apparatus, without substantially modifying its structure/or basic components.

Further scope of the present invention provides an immersion device for sanitising the water of a reservoir, which may also implement a function for controlling the water's heating and/or thermostatting.

Further scope of the present invention provides an immersion device for sanitising and/or thermostatting water to enable retrofitting and/or upgrading household appliances already manufactured and in operation.

These and other purposes are achieved under the invention, with the features listed in the appended independent claim 1.

Further features of the present invention will be better evidenced by the following description of one or more preferred designs, under the patent claims and illustrated, purely for example and without limitation, in the attached drawings, wherein:
- Figure 1 shows, schematically, a section and a detail of a washing machine according to a possible embodiment of the invention;
- Figures 2, 3 and 4 show, respectively, a first, second and third variant of the immersion device of the invention for sanitising and/or controlling the temperature and thermostatting of water;
- Figure 5 shows a specific form of installation of the immersion device of the invention for sanitising and/or thermostatting water;
- Figure 6 shows an example of a temperature sensor for electric resistances according to state of the art.

Elements of the immersion device of the invention for sanitising water are now described using the references in the appended figures. With the purpose of highlighting some features instead of others, not necessarily what showed in the figures is to scale.

It should also be noted that any dimensional and spatial terms (such as "bottom", "top", "inside", "outside", or the like) refer to the positions of the elements as depicted in the attached figures, with no limiting intent regarding possible operating conditions.

In the present discussion, at least initially, reference will be made to a device for sanitising the water within a generic reservoir provided in a household appliance and used for different purposes, e.g., as washing water, rinse water, sanitary water or the like.

Henceforth, "reservoir" is, therefore, to be understood generically as any tank, receptacle or container of water, in the most varied shapes, geometries and volumes.

For simplicity, despite the household appliance and its function, this water will be called "service water", while the device used to eliminate bacteria, viruses, germs, or other pathogens will be called a "sanitising device".

It should also be noted that the sanitising device of the invention is suitable to be integrated into household appliances which provide for heating of the water in their reservoir, such as, with no limiting intent, washing machines, washer-dryers, dishwashers and/or in a reservoir water heater, heat pumps, solar reservoir or, more generally, in any other water tank or receptacle subject to bacterial proliferation phenomena and/or spread of viruses and pathogens.

Even more precisely, as will be seen, the sanitising device of the invention can be advantageously integrated and/or cooperating with at least one of the components of the reservoir normally provided for heating service water, in particular with one or more electrical resistances, or similar means.

For example, with no limiting intent, this sanitising device can be installed directly on the flange of an electrical resistance or directly on an internal wall of a service water reservoir, preferably near said electrical resistance. These aspects will be returned to in this discussion.

With no limiting intent, this electrical resistance, which is electrically insulated from the walls or body of the reservoir, is preferably of the "immersion" type.

It is well known that such electrical resistances, to perform their specific heating function correctly, must be immersed in the service water and therefore, the integration and/or cooperation of the sanitising device of the invention with said components:
- ensures direct and effective purification of service water,
- entails, at least for some specific applications, important advantages in terms of the functioning and durability of the appliance implementing it (e.g. with particular reference to its plastic parts and/or components).

It has also been experimentally observed that the sanitising device of the invention, when integrated and/or cooperating with the aforementioned electrical resistance, can maximise its sanitising effect.

It would be advantageous to locate it in an area of the reservoir where there is a large water exchange due to convective movements caused by the heating, this reducing the proliferation of bacteria, viruses, germs or other pathogens harmful to health.

Scientific studies and laboratory tests have further demonstrated how ultraviolet radiation, and having a sanitising effect, can help slow down and/or limit the formation of limescale on surfaces in contact with the service water, especially if it is rich in calcium carbonates.

Specifically, it has been shown that exposure of these waters to ultraviolet light produces mainly calcite crystals which, being less dense and adherent than other types of calcium carbonate phases, are more easily removed from the surfaces on which they are deposited, for example, the inside walls of a household appliance storage unit or its functional components such as the electrical resistances mentioned above.

That is, there would be strong mitigation of limescale deposits on these surfaces and/or components and, as a consequence, of the technical problems that can arise in terms of heat transfer, abnormal energy consumption and frequency of maintenance.

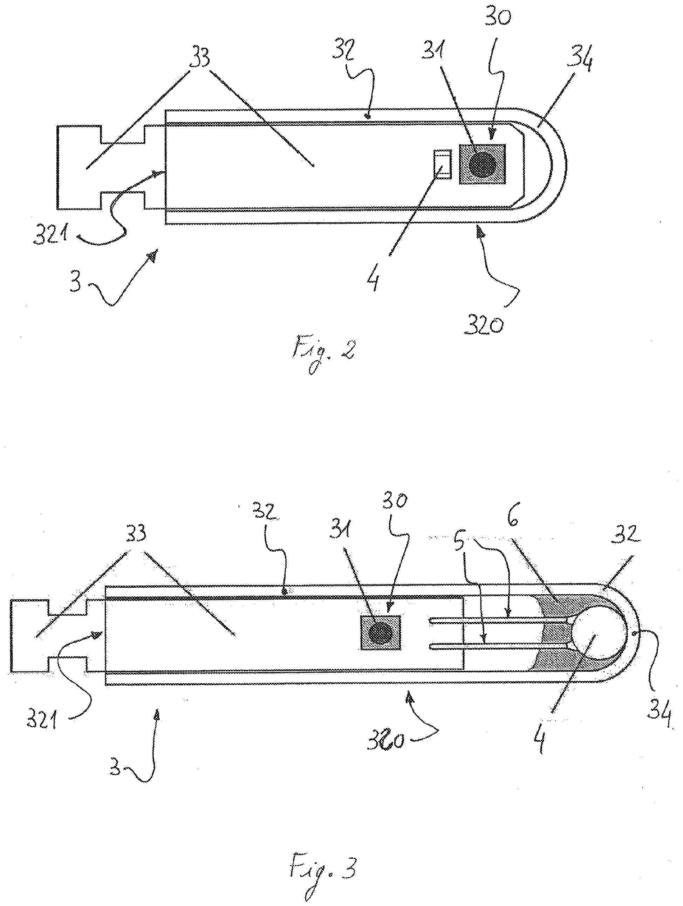

For all these reasons, the sanitising device of the invention, indicated by reference "3" in Figures 2 to 5, may comprise an ultraviolet emitter 30 comprising one or more UV lamps or LEDs 31 (ultraviolet), preferably mounted on a printed circuit board (or PCB) 33.

Said ultraviolet emitter 30 is housed within a container body 32 (hereinafter referred to as "capsule 32") comprising:
- at least one part 320 transparent to the ultraviolet radiation generated by at least one UV lamp or LED 31, said part being preferably that intended to be immersed in or in direct contact with the service water, at least under operating conditions,
- a section 321 for passing at least the electrical power supply cables and connectors of one or more UV lamps or LEDs 31.

There is nothing to prevent capsule 32 of the sanitising device 3 from being totally transparent to ultraviolet radiation to allow a freer positioning of the lamp or LED 31 UV inside it and still guarantee the passage of the ultraviolet radiation.

The capsule 32 of the ultraviolet emitter 30 may also be variously shaped, e.g., cylindrical or "button" shaped.

More precisely, a cylindrical capsule 32 is preferable in the case of installation of the sanitising device 3 on the flange 20 of an electrical resistance 2 of the household appliance 1 while the "button" geometry is more suitable for placement on an internal wall of its reservoir 10.

In both of the above installation variants, the maximum efficiency of the sanitising device 3 is always ensured as it always operates in that area of the reservoir 10 affected, as said, by convective movements of the service water, which improves the sanitising effect.

It is further specified that the sanitising device 3 can be supplied and/or cooperate with the same supply means as already provided for the electrical resistance 2.

Similarly, its switching on and operation can be delegated to specific electromechanical switches (the classic knobs or buttons of a user interface) and/or automatically to the electronic control unit with which every household appliance is usually equipped.

Generally, the operation of the sanitising device 3 may be related to the presence of the service water inside the reservoir 10 of the household appliance 1 and/or its temperature.

For this purpose, the sanitising device 3 of the invention may use at least one temperature sensor 4.

Preferably, said at least one temperature sensor 4 is integrated into said sanitising device 3, e.g. housed within its capsule 32.

With no limiting intent, said at least one temperature sensor 4, e.g., an NTC sensor, may detect and/or control at least:
- the temperature of the service water inside the reservoir 10 to activate the ultraviolet emitter 30 of the sanitising device 3 when it is below a threshold value (e.g., equal to 60°C) below which there is a non-negligible risk of development and proliferation of bacteria, viruses or pathogens (for water temperatures higher than said threshold, sanitisation occurs spontaneously with no intervention of the sanitising device 3 of the invention),
   and/or, when sanitising device 3 is active,
- the temperatures reached by the ultraviolet emitter 30 to detect any abnormal overheating of the UV lamp(s) or LED(s) 31 indicative of potential faults and malfunctions (e.g. from short circuits).

For such purposes, according to a first implementation variant of the invention, shown in fig. 2, this at least one temperature sensor 4 may be installed near the ultraviolet emitter 30 of the sanitising device 3, for example, mounted on the same printed circuit board (or PCB) 33 as the UV lamps or LEDs 31.

Here, the sensor 4 would allow a very reliable measurement of the temperature around the ultraviolet emitter 30, being substantially in contact with it, while the temperature reading of the service water could be less accurate (but still functional for the purposes) due to its greater distance from the walls of the capsule 32.

In other words, with such a configuration, said at least one temperature sensor 4 can measure a temperature that:
- represents precisely and rigorously the temperature of the ultraviolet emitter 30 to be deactivated in case of dangerously high values to preserve its efficiency and lifetime,
- can be considered, with sufficient and tolerable approximation, as indicative of the temperature of the service water at which the sanitising device 3 might be activated or not.

Under a second possible variant, illustrated in fig. 3, the temperature sensor 4 may instead be positioned far away from the ultraviolet emitter 30, for example, placed in proximity to the cap 34 of the capsule 32 of the sanitising device 3, substantially in contact with and cooperating with at least a portion of its internal walls.

In such a case, the temperature sensor 4 may be connected to the printed circuit board (or PCB) 33 of the ultraviolet emitter 30 with suitable contacts or electrical connections 5, while a conductive paste 6 (or similar means), if any, may be inserted between it and said internal walls of the capsule 32 to improve its thermal conductivity.

With this variant, particularly reliable measurement of the service water temperature can be obtained, but only an indirect, and therefore less precise, measurement of any overheating of the ultraviolet emitter 30, due to the greater distance of the sensor 4 from its lamp or LED UV 31.

In this case, detecting any failure of the ultraviolet emitter 30 may require the implementation of appropriate safety logic and algorithms in the household appliance's electronics.

For example, a possible algorithm may envisage alternating programmed switch on and switch-off of the sanitising device 3 and in measuring, from time to time, the temperature of the service water in its surroundings to distinguish the possible contribution of the sanitising device 3 from that of the electrical resistance 2 which is, as known, responsible for heating the service water.

In fact, if the temperatures measured with the sanitising device 3 switched on are substantially the same as those with the sanitising device 3 switched off, no malfunctioning of the device is detected; on the contrary, if these temperatures differ by a predefined threshold, this may be a sign of abnormal overheating of the ultraviolet emitter 30 which can be cautiously deactivated.

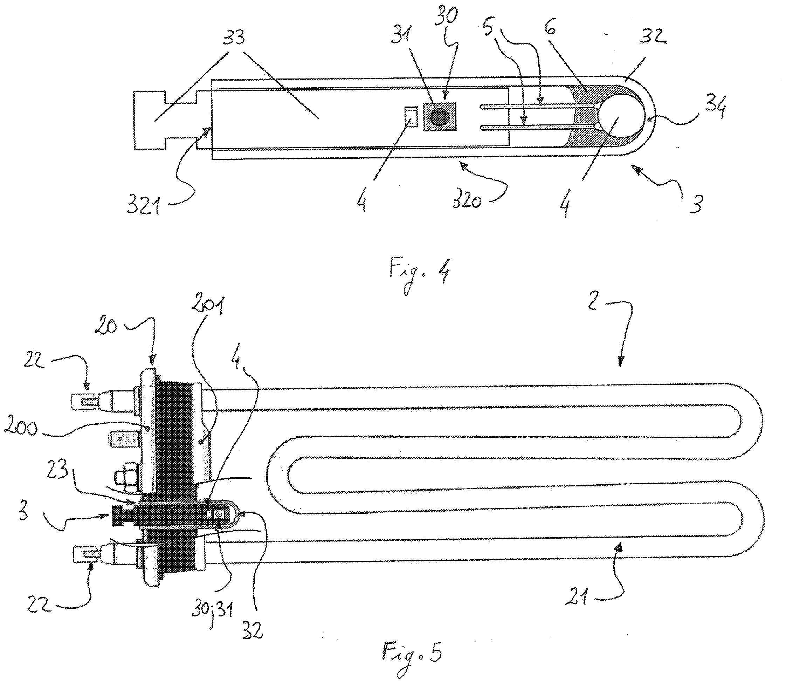

There is nothing to prevent the possibility of providing a "redundant" variant, a that is combination of the previous ones, in which the sanitising device 3 may comprise at least a first temperature sensor 4 placed in proximity to the ultraviolet emitter 30 and at least a second sensor 4 substantially in contact with and cooperating with the internal walls of the capsule 32, as shown in fig. 4.

In such a case, therefore, there is an optimal and direct measurement of both the temperatures around the ultraviolet emitter 30, verifying any overheating due to failure or malfunction, and the service water, without the need of approximations or specific control algorithms.

When the activation of the sanitising device 3 of the invention is not required or necessary (e.g., as mentioned above, for service water temperatures already sufficient in themselves to avert the risk of pathogenic proliferation), the relative temperature sensor 4 can be used to "pilot" the service water heating components 2, acting as and replacing the well-known and traditional temperature probes used so far.

In other words, said at least one temperature sensor 4, which is integrated into the sanitising device 3 of the invention, can also be used for only thermostating the service water, i.e. for activating and deactivating an electrical resistance 2 of the reservoir 10 of a household appliance 1.

According to the invention, it is, therefore, possible to combine in a single immersion device both the function of sanitising and of managing the heating and thermostatting of service water, thus reducing the number of components and accessories of a household appliance with advantages in terms of production, marketing and maintenance costs.

For all the above reasons, capsule 32 of the sanitising device 3 is preferably made of quartz glass.

As already mentioned, this material:
- is particularly transparent to ultraviolet radiation, allowing the radiation from the ultraviolet emitter 30 of the sanitising device 3 to pass through it effectively,
- has physical characteristics suitable and compatible with the use and operation of the above one or more temperature sensors 4 for monitoring abnormal overheating of the ultraviolet emitter 30 and/or for detecting temperatures of the service water in a reservoir 10 of the household appliance 1. Indeed, it is well known that quartz glass is characterised by high thermal conductivity and, at the same time, high electrical resistivity.

In practice, a quartz capsule 32 is able to electrically isolate both the ultraviolet emitter 30 and the one or more temperature sensors 4 of the sanitising device 3 of the invention from the support on which it is mounted, for example, from the flange 20 of an electrical resistance 2 or the walls 100, 101 (when metallic) of a reservoir 10 of a household appliance 1.

Compared to steel or plastic capsules, which are currently used, quartz glass also ensures greater accuracy and responsiveness in reading the water temperature of the reservoir 10.

In fact, it is well known that steel, characterised by high electrical conductivity, would require the above-mentioned temperature sensors 4 to be electrically insulated, e.g. by specific resins, thus lowering their thermal conductivity.

On the other hand, plastic capsules, while not requiring insulating resins, would not guarantee adequate levels of thermal conductivity and could be subject to rapid degradation of their physical-functional characteristics by ultraviolet radiation.

Using quartz glass can also improve the time constant, i.e. the response time (indicative of the system's reactivity) of the aforementioned temperature sensors 4, thus enabling possible monitoring of the temperature trend of the service water or humidity when the reservoir 10 is emptied.

It has been mentioned several times that the sanitising device 3 of the invention, for its proper functioning, can be installed directly on an internal wall 100, 101 of the reservoir 10 of a household appliance 1, provided that it is in proximity to the relevant electrical resistance 2 for heating the service water or, alternatively, integrated to the electrical resistance 2 itself.

Under the latter embodiment (see fig. 5), a seat 23 is therefore suitably provided on the flange 20 of the electrical resistance 2 to install the sanitising device 3 in its multiple embodiments mentioned above.

Preferably, this seat 23 might comprise a hole or through-slot extending through the entire thickness of the flange 20, between its face 200 housing the power supply connectors 22 and the face 201 supporting the heating element 21 which in the attached figures is shown, with no limiting intent, as a serpentine (nothing prohibits other similar types of heating elements among those known and commercially available).

Once inserted in this seat 23, the sanitizing device 3 of the invention will be protruding towards the inside of the reservoir 10 of the household appliance 1 so as to be, when provided for, in contact with the service water to be sanitized and/or thermostated.

According to this variant, the electrical resistance 2 can therefore implement both its typical function of heating and thermostatting the service water of a reservoir 10 and sanitising it from bacteria, viruses and/or pathogens.

This choice may allow and facilitate *retrofitting* and *upgrading* operations on household appliances already on the market and/or in use, i.e. the simple replacement of traditional electric resistances and/or associated temperature probes with those of the invention without requiring a redesign of the household appliance and/or structural modifications to its reservoir (or other parts) and its mechanics.

Having dealt with the invention in its most general aspects, we now move on to describe one of its specific applications, which is one favourite, namely on the washing machine 1 (this term also includes similar household appliances such as so-called 'washer-dryers').

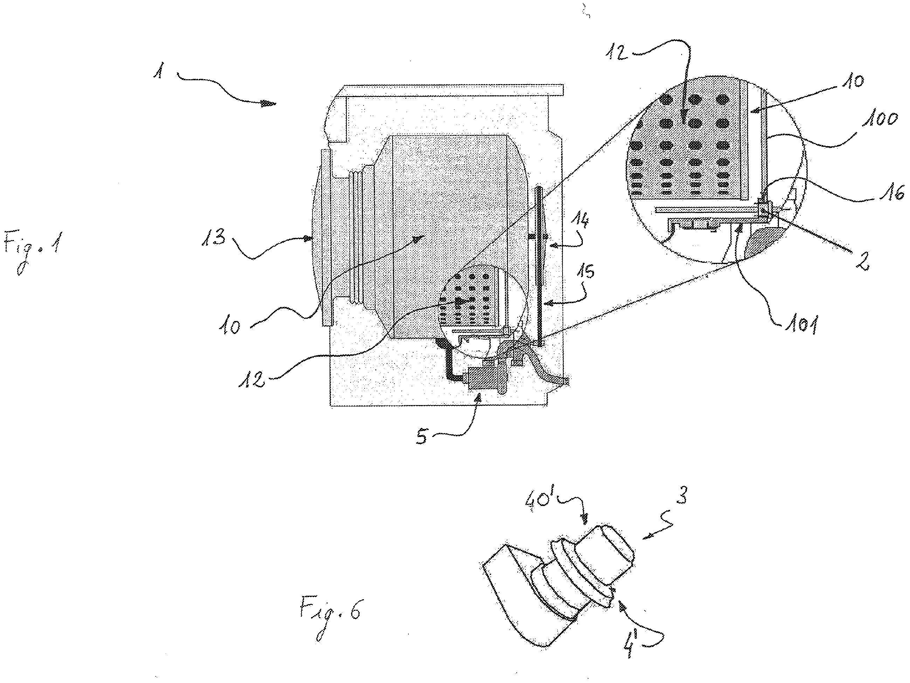

As shown in fig. 1, in the same way as the solutions of state of the art, the immersion electrical resistance 2 comprising the sanitising device 3 of the invention (which in this figure is shown, with no limiting intent, with a temperature sensor 4 in proximity to the ultraviolet emitter 30) may be positioned on the tank 10 of the washing machine 1.

This tank 10 defines the reservoir described above, and inside it rotates the drum 12 into which the clothes and linen to be washed are loaded through a corresponding porthole 13.

For example, the electrical resistance 2 of the invention may be installed in correspondence with a first housing 16 obtained on a wall 100 of the tank 10, e.g. the rear wall, and in proximity to the bottom 101, arranged with the hydraulic unit 5 for draining the water at the end of each washing step and/or process.

The positioning near or in correspondence with the bottom 101 of tank 10 of the electric resistance 2 and the relative sanitising device 3 ensures their constant contact with the washing water, at least during the washing and rinsing phases when they are completely immersed in it.

This allows direct and targeted ultraviolet irradiation of the washing water and, as a consequence, of the cloths and linen, which are then properly sanitised.

At the same time, the internal walls of tank 10 (or other functional components), which are increasingly made of plastic material, are not affected and directly exposed to this ultraviolet radiation, thus slowing down their consequent ageing or degradation process.

As seen, ultraviolet radiation also reduces limescale deposits on the electrical heating element 2 or other components inside the tank 10 of the washing machine 1.

This brings to a reduction in the number of maintenance operations or replacement of malfunctioning or worn-out components, ensuring full functionality of the household appliances, low running costs and an extension of their operating life.

Referring to the field of washing machines 1 (or similar washing machines), the sanitising device 3 of the invention, managed by the control electronics of the machine:
- can perform its function of sanitising the washing water (with relative monitoring of any abnormal overheating of its ultraviolet emitter 30) during, for example, the typical phases of soaking and/or pre-washing and/or rinsing, etc. (in general, during all those phases conducted at low water temperature),
- while it can act as a temperature probe during the phases of heating and thermostatting of the water for high-temperature washing phases, for example for the activation/deactivation of an electrical resistance 2.

It should be noted that only the main components of the washing machine 1 have been described which are functional for the purposes of the invention. All other elements of the invention which are not directly related to the object of the invention, but which are well known to a person skilled in the art (e.g., the motor and its transmission components for the rotation of the drum 12 such as pulleys 14 and belts 15, the ballasts and dampers inside the body, the seals, the user interface and the electronic control unit, etc.), have therefore been voluntarily omitted.

It is also clear that in the practical implementation of the invention, numerous modifications and further variants may be envisaged, all falling under the same inventive concept.

For example, as shown in fig. 6, there is nothing to prevent the provision of a simplified form of the sanitising device 3 of the invention comprising at least one known UV emitter provided and integrated directly on a conventional temperature probe 4' (e.g., of the "button" type), preferably at its housing 40'.

Like the traditional state of the art solutions, the probe 4' comprising the sanitising function might be positioned either in special housings obtained on a wall of the reservoir 10, provided that it is substantially in proximity to the electrical resistance 2, or also integrated into the flange 20 of the same resistance 2.

Last, it should be noted that all that has been said referring to the aforementioned washing machine 1 can be extended, with minimal adaptations within reach of a technician in the branch, to any other household appliance that includes internal storage for service or washing water, in particular to both domestic and industrial dishwashers, heat pumps or storage water heaters.

## Claims

1. An immersion electrical resistance (2) for heating service water within a reservoir (10) of a household appliance (1), said electrical resistance (2) comprising a flange (20) for its mounting on a housing (16) of a wall (100) of said reservoir (10) and for supporting at least one heating element (21) **characterised in that** it further comprises an immersion sanitising device (3) for sanitising said service water and comprising at least one ultraviolet emitter (30) said sanitising device (3) being:
- immersed in said service water and placed in an area of said reservoir (10) **characterised by** high temperatures of the service water and by convective movements thereof,
- mounted on a seat (23) of said flange (20) of said electrical resistance (2), said seat (23) comprising a hole or slot extending through the entire thickness of the flange (20) so that said sanitising device (3) protrudes towards the inside of the reservoir (10).

2. An immersion electrical resistance (2) according to claim 1 **characterised in that** said at least one ultraviolet emitter (30) of said sanitising device (3):
- comprises one or more UV lamps or LEDs (31), and
- is housed within a container body or capsule (32),
and **in that** said sanitising device (3) further comprises at least one temperature sensor (4) capable of detecting and/or controlling at least:
- the temperature of the service water within the reservoir (10), and/or
- the temperature reached by the ultraviolet emitter (30) to detect any abnormal overheating of said one or more UV lamps or LEDs (31).

3. An immersion electrical resistance (2) according to claim 2 **characterised in that** said at least one temperature sensor (4) of said sanitising device (3) is installed near said ultraviolet emitter (30), said temperature sensor (4) allowing a very reliable and precise measurement of the temperature reached by the ultraviolet emitter (30) and providing an approximate, but still functional for the purposes, measurement of the temperature of said service water.

4. An immersion electrical resistance (2) according to claim 2 **characterised in that** said at least one temperature sensor (4) of said sanitising device (3) is positioned internally to the capsule (32) in proximity to its cap (34), substantially in contact with and/or cooperating with at least a portion of its internal walls, said temperature sensor (4) allowing a reliable and precise measurement of the temperature of the service water and an indirect measurement of the temperature reached by the ultraviolet emitter (30).

5. An immersion electrical resistance (2) according to any preceding claim from 2 to 4 **characterised in that** between said at least one temperature sensor (4) and the inner walls of the capsule (32) a conductive paste (6) is provided, said temperature sensor (4) being connected to ultraviolet emitter (30) with contacts or electrical connections (5).

6. An immersion electrical resistance (2)) according to claim 2 **characterised in that** said sanitising device (3) comprises at least a first temperature sensor (4) in proximity to said ultraviolet emitter (30) and at least a second temperature sensor (4) substantially in contact with and/or cooperating with at least the inner walls of the capsule (32) of the sanitising device (3), said temperature sensors (4) allowing an optimal and direct measurement of the temperature reached by said ultraviolet emitter (30) and of the temperature of the service water.

7. An immersion electrical resistance (2) according to any preceding claim from 2 to 6 **characterised in that** said at least one temperature sensor (4) of said sanitising device (3) could further drive, by activating or deactivating it, said one or more components (2) of said reservoir (10) in charge of heating service water.

8. An immersion electrical resistance (2) according to any preceding claim from 2 to 7 **characterised in that** said at least one temperature sensor (4) of said sanitising device (3) is an NTC sensor.

9. An immersion electrical resistance (2) according to at least claim 2 **characterised in that** said capsule (32) of said sanitising device (3) comprises:
- at least one part (320), transparent to the ultraviolet radiation generated by said ultraviolet emitter (30), said at least one part (320) being that intended to be immersed in or in direct contact with said service water of the reservoir (10),
- a section (321) for passing at least the electrical supply cables and connectors of said one or more UV lamps or LED UVs (31) of said ultraviolet emitter (30).

10. An immersion electrical resistance (2) according to at least claim 2 **characterised in that** said capsule (32) of said sanitising device (3) is totally transparent to said ultraviolet radiation.

11. An immersion electrical resistance (2) according to claim 9 or 10 **characterised in that** said capsule (32) of said sanitising device (3) is made of quartz glass, said quartz glass being transparent to ultraviolet radiation and having thermal conductivity and electrical resistivity characteristics compatible with the use and operation of said at least one temperature sensor (4).

12. An immersion electrical resistance (2) according to one or more of the preceding claims **characterised in that** said sanitising device (3):
- is supplied and/or cooperates with the supply means provided for said electrical resistance (2),
- switches on and operates with specific electromechanical selectors and/or with the electronic control unit of the household appliance (1), said switch on being related to the presence of the service water in the reservoir (10) and/or to its temperature.

13. An immersion electrical resistance (2) according to any preceding claim **characterised by** being installed and operating in the reservoir (10) of a washing machine, washer-dryer, dishwasher, reservoir water heater and/or in any other reservoir or container for service water subject to bacterial proliferation phenomena and/or spread of viruses and pathogens.

14. Washing machine (1) comprising at least:
- a tank (10) defining a reservoir (10) for service water, said service water being the water for washing clothes and linen,
- a drum (12) rotating in said tank (10) for loading the clothes and linen, **characterised in that** said washing machine (1) further comprises at least an immersion electrical resistance (2) for heating said washing water according to one or more of claims 1 to 13, said immersion electrical resistance (2) being installed on a first housing (16) of a wall (100) of said tank (10).

15. Washing machine (1) according to the previous claim **characterised in that** said sanitising device (3) is positioned near or at the bottom (101) of said tank (10), said sanitising device (3) being in contact with and immersed in said washing water of said tank (10).

16. Washing machine (1) according to the previous claim **characterised in that** the sanitising device (3):
- performs its function of sanitising the water during the soaking and/or pre-washing and/or rinsing phases
- acts as a temperature sensor during the heating and thermostatting of the washing water, e.g. for the activation/deactivation of the electrical resistance (2).

17. Storage water heater comprising a reservoir (10) for sanitary service water **characterised in that** said storage water heater further comprises at least an immersion electrical resistance (2) for heating and thermostatting said service water according to one or more of claims 1 to 13.

## Patentansprüche

1. Elektrischer Tauchwiderstand (2) zum Erhitzen von Brauchwasser in einem Behälter (10) eines Haushaltsgeräts (1), wobei der elektrische Widerstand (2) einen Flansch (20) für seine Montage an einem Gehäuse (16) einer Wand (100) des Behälters (10) und zum Tragen mindestens eines Heizelements (21) aufweist, **dadurch gekennzeichnet, dass** er ferner eine Eintauchdesinfektionsvorrichtung (3) zum Desinfizieren des Brauchwassers aufweist, die mindestens einen Ultraviolett-Strahler (30) umfasst, wobei die Desinfektionsvorrichtung (3):
- in das Brauchwasser eingetaucht und in einem Bereich des Behälters (10) angeordnet ist, der durch hohe Temperaturen des Brauchwassers und durch Konvektionsbewegungen davon gekennzeichnet ist,
- auf einem Sitz (23) des Flansches (20) des elektrischen Widerstands (2) montiert ist, wobei der Sitz (23) ein Loch oder einen Schlitz aufweist, das oder der sich durch die gesamte Dicke des Flansches (20) erstreckt, so dass die Desinfektionsvorrichtung (3) in das Innere des Behälters (10) vorsteht.

2. Elektrischer Tauchwiderstand (2) nach Anspruch 1, **dadurch gekennzeichnet, dass** mindestens ein Ultraviolett-Strahler (30) der Desinfektionsvorrichtung (3):
- eine oder mehrere UV-Lampen oder LEDs (31) aufweist und
- in einem Behälterkörper oder einer Kapsel (32) untergebracht ist,
und **dadurch, dass** die Desinfektionsvorrichtung (3) ferner mindestens einen Temperatursensor (4) aufweist, der in der Lage ist, mindestens zu erfassen und/oder zu steuern:
- die Temperatur des Brauchwassers im Behälter (10) und/oder
- die Temperatur, die vom Ultraviolett-Strahler (30) erreicht wird, um eine anormale Überhitzung der einen oder mehreren UV-Lampen oder UV-LEDs (31) zu erkennen.

3. Elektrischer Tauchwiderstand (2) nach Anspruch 2, **dadurch gekennzeichnet, dass** der mindestens eine Temperatursensor (4) der Desinfektionsvorrichtung (3) in der Nähe des Ultraviolett-Strahlers (30) installiert ist, wobei der Temperatursensor (4) eine sehr zuverlässige und präzise Messung der Temperatur, die von dem Ultraviolett-Strahler (30) erreicht wird, ermöglicht und eine ungefähre, aber für die Zwecke noch funktionale Messung der Temperatur des Brauchwassers bereitstellt.

4. Elektrischer Tauchwiderstand (2) nach Anspruch 2, **dadurch gekennzeichnet, dass** der mindestens eine Temperatursensor (4) der Desinfektionsvorrichtung (3) im Inneren der Kapsel (32) in der Nähe ihrer Kappe (34) im Wesentlichen in Kontakt mit mindestens einem Bereich ihrer Innenwände und/oder mit diesen zusammenwirkend angeordnet ist, wobei der Temperatursensor (4) eine zuverlässige und präzise Messung der Temperatur des Brauchwassers und eine indirekte Messung der Temperatur, die von dem Ultraviolett-Strahler (30) erreicht wird, ermöglicht.

5. Elektrischer Tauchwiderstand (2) nach einem der vorhergehenden Ansprüche 2 bis 4, **dadurch gekennzeichnet, dass** zwischen dem mindestens einen Temperatursensor (4) und den Innenwänden der Kapsel (32) eine leitfähige Paste (6) vorgesehen ist, wobei der Temperatursensor (4) mit dem Ultraviolett-Strahler (30) mit Kontakten oder elektrischen Verbindungen (5) verbunden ist.

6. Elektrischer Tauchwiderstand (2) nach Anspruch 2, **dadurch gekennzeichnet, dass** die Desinfektionsvorrichtung (3) mindestens einen ersten Temperatursensor (4) in der Nähe des Ultraviolett-Strahlers (30) und mindestens einen zweiten Temperatursensor (4) aufweist, der im Wesentlichen mit mindestens den Innenwänden der Kapsel (32) der Desinfektionsvorrichtung (3) in Kontakt steht und/oder mit diesen zusammenwirkt, wobei die Temperatursensoren (4) eine optimale und direkte Messung der Temperatur, die von dem Ultraviolett-Strahler (30) erreicht wird, und der Temperatur des Brauchwassers ermöglichen.

7. Elektrischer Tauchwiderstand (2) nach einem der vorhergehenden Ansprüche 2 bis 6, **dadurch gekennzeichnet, dass** der mindestens eine Temperatursensor (4) der Desinfektionsvorrichtung (3) durch Aktivieren oder Deaktivieren ferner die eine oder mehrere Komponenten (2) des Behälters (10) antreiben könnte, die für die Erwärmung des Brauchwassers zuständig sind.

8. Elektrischer Tauchwiderstand (2) nach einem der vorhergehenden Ansprüche 2 bis 7, **dadurch gekennzeichnet, dass** mindestens ein Temperatursensor (4) der Desinfektionsvorrichtung (3) ein NTC-Sensor ist.

9. Elektrischer Tauchwiderstand (2) mindestens nach Anspruch 2, **dadurch gekennzeichnet, dass** die Kapsel (32) der Desinfektionsvorrichtung (3) aufweist:
- mindestens einen Teil (320), der für die Ultraviolettstrahlung transparent ist, die vom Ultraviolett-Strahler (30) erzeugt wird, wobei der mindestens eine Teil (320) dazu bestimmt ist, in das Brauchwasser des Behälters (10) eingetaucht zu werden oder damit in direkten Kontakt zu stehen,
- einen Abschnitt (321) zum Durchführen von mindestens den elektrischen Versorgungskabeln und Steckern der einen oder mehreren UV-Lampen oder UV-LEDs (31) des Ultraviolett-Strahlers (30).

10. Elektrischer Tauchwiderstand (2) mindestens nach Anspruch 2, **dadurch gekennzeichnet, dass** die Kapsel (32) der Desinfektionsvorrichtung (3) für Ultraviolettstrahlung vollkommen transparent ist.

11. Elektrischer Tauchwiderstand (2) nach Anspruch 9 oder 10, **dadurch gekennzeichnet, dass** die Kapsel (32) der Desinfektionsvorrichtung (3) aus Quarzglas besteht, wobei das Quarzglas für Ultraviolettstrahlung transparent ist und Eigenschaften der Wärmeleitfähigkeit und des elektrischen Widerstands aufweist, die mit der Verwendung und dem Betrieb des mindestens einen Temperatursensors (4) kompatibel sind.

12. Elektrischer Tauchwiderstand (2) nach einem oder mehreren der vorhergehenden Ansprüche, **dadurch gekennzeichnet, dass** die Desinfektionsvorrichtung (3):
- mit den Versorgungsmitteln, die für den elektrischen Widerstand (2) vorgesehen sind, versorgt wird und/oder mit diesen zusammenarbeitet,
- mit spezifischen elektromechanischen Wahlschaltern und/oder mit der elektronischen Steuereinheit des Haushaltsgeräts (1) eingeschaltet und betrieben wird, wobei das Einschalten mit dem Vorhandensein des Brauchwassers im Behälter (10) und/oder mit dessen Temperatur zusammenhängt.

13. Elektrischer Tauchwiderstand (2) nach einem der vorhergehenden Ansprüche, **dadurch gekennzeichnet, dass** er im Behälter (10) einer Waschmaschine, eines Waschtrockners, einer Geschirrspülmaschine, eines Warmwasserbereiters mit Behälter und/oder in jedem anderen Behälter oder Container für Brauchwasser installiert ist und dort betrieben wird, das bakteriellen Vermehrungserscheinungen und/oder der Ausbreitung von Viren und Krankheitserregern ausgesetzt ist.

14. Waschmaschine (1), umfassend mindestens:
- einen Tank (10), der einen Behälter (10) für Brauchwasser definiert, wobei das Brauchwasser das Wasser zum Waschen von Kleidung und Wäsche ist,
- eine Trommel (12), die sich zum Laden der Kleidung und Wäsche in dem Tank (10) dreht,
**dadurch gekennzeichnet, dass** die Waschmaschine (1) ferner mindestens einen elektrischen Tauchwiderstand (2) zum Erwärmen des Waschwassers nach einem oder mehreren der Ansprüche 1 bis 13 aufweist, wobei der elektrische Tauchwiderstand (2) an einem ersten Gehäuse (16) einer Wand (100) des Tanks (10) installiert ist.

15. Waschmaschine (1) nach dem vorhergehenden Anspruch, **dadurch gekennzeichnet, dass** die Desinfektionsvorrichtung (3) in der Nähe oder am Boden (101) des Tanks (10) angeordnet ist, wobei die Desinfektionsvorrichtung (3) in Kontakt mit dem Waschwasser des Tanks (10) steht und in dieses eingetaucht ist.

16. Waschmaschine (1) nach dem vorhergehenden Anspruch, **dadurch gekennzeichnet, dass** die Desinfektionsvorrichtung (3):
- ihre Funktion des Desinfizierens des Wassers während der Einweich- und/oder Vorwasch- und/oder Spülphasen erfüllt
- als Temperatursensor beim Erwärmen und Thermostatisieren des Waschwassers, beispielsweise zum Aktivieren/Deaktivieren des elektrischen Widerstandes (2) fungiert.

17. Speicherwassererwärmer, umfassend einen Behälter (10) für Brauchwasser, **dadurch gekennzeichnet, dass** der Speicherwassererwärmer ferner mindestens einen elektrischen Tauchwiderstand (2) zum Erwärmen und Thermostatisieren des Brauchwassers nach einem oder mehreren der Ansprüche 1 bis 13 aufweist.

## Revendications

1. Résistance électrique à immersion (2) pour chauffer l'eau de service dans un réservoir (10) d'un appareil ménager (1), ladite résistance électrique (2) comprenant une bride (20) pour son montage sur un logement (16) d'une paroi (100) dudit réservoir (10) et pour supporter au moins un élément chauffant (21) **caractérisé en ce qu'**il comprend en outre un dispositif d'assainissement à immersion (3) pour assainir ladite eau de service et comprenant au moins un émetteur d'ultraviolets (30) ledit dispositif d'assainissement (3) étant:
- immergé dans ladite eau de service et placé dans une zone dudit réservoir (10) **caractérisée par** des températures élevées de l'eau de service et par des mouvements convectifs de celle-ci,
- monté sur un siège (23) de ladite bride (20) de ladite résistance électrique (2), ledit siège (23) comportant un trou ou une fente s'étendant sur toute l'épaisseur de la bride (20) de sorte que ledit dispositif d'assainissement (3) fasse saillie vers l'intérieur du réservoir (10).

2. Résistance électrique à immersion (2) selon la revendication 1 **caractérisée en ce que** ledit au moins un émetteur d'ultraviolets (30) dudit dispositif d'assainissement (3):
- comprend une ou plusieurs lampes UV ou DEL (31), et
- est logé dans un corps de conteneur ou une capsule (32),
et **en ce que** ledit dispositif d'assainissement (3) comprend en outre au moins un capteur de température (4) capable de détecter et/ou de contrôler au moins :
- la température de l'eau de service dans le réservoir (10), et/ou
- la température atteinte par l'émetteur d'ultraviolets (30) pour détecter toute surchauffe anormale de ladite ou desdites lampes UV ou LED (31).

3. Résistance électrique à immersion (2) selon la revendication 2 **caractérisée en ce que** ledit au moins un capteur de température (4) dudit dispositif d'assainissement (3) est installé à proximité dudit émetteur d'ultraviolets (30), ledit capteur de température (4) permettant une mesure très fiable et précise de la température atteinte par l'émetteur d'ultraviolets (30) et fournissant une mesure approximative, mais toujours fonctionnelle pour les besoins, de la température de ladite eau de service.

4. Résistance électrique à immersion (2) selon la revendication 2 **caractérisée en ce que** ledit au moins un capteur de température (4) dudit dispositif d'assainissement (3) est positionné à l'intérieur de la capsule (32) à proximité de son bouchon (34), sensiblement en contact et/ou coopérant avec au moins une partie de ses parois internes, ledit capteur de température (4) permettant une mesure fiable et précise de la température de l'eau de service et une mesure indirecte de la température atteinte par l'émetteur d'ultraviolets (30).

5. Résistance électrique à immersion (2) selon l'une quelconque des revendications précédentes de 2 à 4, **caractérisée par la** présence d'une pâte conductrice (6) entre ledit au moins un capteur de température (4) et les parois intérieures de la capsule (32), ledit capteur de température (4) étant relié à l'émetteur d'ultraviolets (30) par des contacts ou des connexions électriques (5).

6. Résistance électrique à immersion (2) selon la revendication 2 **caractérisée en ce que** ledit dispositif d'assainissement (3) comprend au moins un premier capteur de température (4) à proximité dudit émetteur d'ultraviolets (30) et au moins un second capteur de température (4) sensiblement en contact et/ou coopérant avec au moins les parois intérieures de la capsule (32) du dispositif d'assainissement (3), lesdits capteurs de température (4) permettant une mesure optimale et directe de la température atteinte par ledit émetteur d'ultraviolets (30) et de la température de l'eau de service.

7. Résistance électrique à immersion (2) selon toute revendication précédente de 2 à 6 **caractérisée en ce que** ledit au moins un capteur de température (4) dudit dispositif d'assainissement (3) pourrait en outre piloter, en l'activant ou en le désactivant, lesdits un ou plusieurs composants (2) dudit réservoir (10) chargé de chauffer l'eau de service.

8. Résistance électrique à immersion (2) selon l'une quelconque des revendications précédentes de 2 à 7 **caractérisée en ce que** ledit au moins un capteur de température (4) dudit dispositif d'assainissement (3) est un capteur NTC.

9. Résistance électrique à immersion (2) selon au moins la revendication 2 **caractérisée en ce que** ladite capsule (32) dudit dispositif d'assainissement (3) comprend :
- au moins une partie (320), transparente au rayonnement ultraviolet généré par ledit émetteur d'ultraviolets (30), ladite au moins une partie (320) étant celle destinée à être immergée dans ou en contact direct avec ladite eau de service du réservoir (10),
- une section (321) pour faire passer au moins les câbles d'alimentation électrique et les connecteurs de ladite ou desdites lampes UV ou DEL UV (31) dudit émetteur d'ultraviolets (30).

10. Résistance électrique à immersion (2) selon au moins la revendication 2 **caractérisée en ce que** ladite capsule (32) dudit dispositif d'assainissement (3) est totalement transparente audit rayonnement ultraviolet.

11. Résistance électrique à immersion (2) selon la revendication 9 ou 10, **caractérisée en ce que** ladite capsule (32) dudit dispositif d'assainissement (3) est en verre de quartz, ledit verre de quartz étant transparent au rayonnement ultraviolet et présentant des caractéristiques de conductivité thermique et de résistivité électrique compatibles avec l'utilisation et le fonctionnement dudit au moins un capteur de température (4).

12. Résistance électrique à immersion (2) selon l'une ou plusieurs des revendications précédentes, **caractérisée en ce que ledit** dispositif d'assainissement (3) :
- est alimenté et/ou coopère avec les moyens d'alimentation prévus pour ladite résistance électrique (2),
- s'allume et fonctionne avec des sélecteurs électromécaniques spécifiques et/ou avec l'unité de commande électronique de l'appareil ménager (1), cet allumage étant lié à la présence de l'eau de service dans le réservoir (10) et/ou à sa température.

13. Résistance électrique à immersion (2) selon toute revendication précédente **caractérisée par son** installation et son fonctionnement dans le réservoir (10) d'une machine à laver, d'une laveuse-sécheuse, d'un lave-vaisselle, d'un chauffe-eau à réservoir et/ou dans tout autre réservoir ou récipient d'eau de service soumis à des phénomènes de prolifération bactérienne et/ou de propagation de virus et d'agents pathogènes.

14. Machine à laver (1) comprenant au moins :
- une cuve (10) définissant un réservoir (10) pour l'eau de service, ladite eau de service étant l'eau de lavage des vêtements et du linge,
- un tambour (12) tournant dans ladite cuve (10) pour charger les vêtements et le linge,
**caractérisée en ce que** ladite machine à laver (1) comprend en outre au moins une résistance électrique à immersion (2) pour chauffer ladite eau de lavage selon une ou plusieurs des revendications de 1 à 13 ladite résistance électrique à immersion (2) pour chauffer ladite eau de lavage selon une ou plusieurs des revendications de 1 à 13 , ladite résistance électrique à immersion (2) étant installée sur un premier logement (16) d'une paroi (100) de ladite cuve (10).

15. Machine à laver (1) selon la revendication précédente **caractérisée en ce que** ledit dispositif d'assainissement (3) est positionné à proximité ou au fond (101) de ladite cuve (10), ledit dispositif d'assainissement (3) étant en contact et immergé dans ladite eau de lavage de ladite cuve (10).

16. Machine à laver (1) selon la revendication précédente **caractérisée en ce que** le dispositif d'assainissement (3) :
- assure sa fonction d'assainissement de l'eau pendant les phases de trempage et/ou de prélavage et/ou de rinçage
- agit comme un capteur de température pendant le chauffage et la thermostatisation de l'eau de lavage, par exemple pour l'activation/désactivation de la résistance électrique (2).

17. Chauffe-eau à accumulation comprenant un réservoir (10) d'eau de service **caractérisé en ce que** ledit chauffe-eau à accumulation comprend en outre au moins une résistance électrique à immersion (2) pour chauffer et thermostater ladite eau de service selon l'une ou plusieurs des revendications de 1 à 13.
